# EUROPÄISCHE PATENTANMELDUNG

(11) **EP 4 403 371 A1**
(43) Veröffentlichungstag der Anmeldung: **24.07.2024**
(21) Anmeldenummer: 24151372.0
(22) Anmeldetag: 11.01.2024
(51) Int. Cl.: B41M 5/323, B41M 5/337, B41M 5/333, B41M 5/34, C09D 11/328, C09D 11/50

(54) **POLYMERSCHICHTVERBUND FÜR SICHERHEITS- UND WERTDOKUMENTE, HERSTELLUNGSVERFAHREN, ZUBEREITUNG UND VERWENDUNG**

(30) Priorität: 18.01.2023 DE 102023101175
(71) Anmelder: Bundesdruckerei GmbH, 10969 Berlin (DE)
(72) Erfinder: Muth, Oliver, 12277 Berlin (DE); Ferber, Alexander, 12105 Berlin (DE); Knebel, Michael, 13086 Berlin (DE)
(74) Vertreter: Mammel und Maser Patentanwälte PartG mbB

(57) **Zusammenfassung**

Die Erfindung betrifft einen Verbund (11) umfassend Polymerschichten (12) auf Basis von Polycarbonat für Sicherheitsdokumente, wobei wenigstens eine Polymerschicht (12) zur Bereitstellung einer thermochromen Schicht (16) mit einer Zubereitung (17) umfassend einen Leukofarbstoff (13), einen NIR-Aktivator (14), Polycarbonat, Lösemittel und optional einen Entwickler (15) beschichtet und insbesondere bedruckt ist.

## Beschreibung

Die vorliegende Erfindung betrifft einen Verbund von Polymerschichten auf der Basis von Polycarbonatpolymeren für Sicherheits- oder Wertdokumente, ein Verfahren zur Herstellung des Verbunds, eine Zubereitung zur Beschichtung der Polymerschichten, die Verwendung der Zubereitung und Sicherheits- und Wertdokumente.

Sicherheits- oder Wertdokumente wie zum Beispiel der Bundespersonalausweis werden in der Regel aus Polycarbonat (PC) gefertigt und dann bei Bedarf mittels Laser-Engraving-Verfahren personalisiert. Hierbei werden über optisch/thermische Wechselwirkungen eines Werkstoffes des Sicherheits- oder Wertdokuments mit der Laserstrahlung örtlich hoch aufgelöste Pyrolysevorgänge erzeugt, so dass lokale Schwärzungen infolge von Kohlenstoffbildung auftreten. Nachteil dieses Verfahrens ist die Beschränkung auf Schwarz-Weiß- und bestenfalls Graustufendarstellungen.

Eine sogenannte farbige Laserpersonalisierung, bei der ein lasersensitives Material zunächst in einen PC-Kartenkörper integriert ist und später dann je nach Prozessparametern und eingesetztem/n Laser(n) ein farbiges Abbild ermöglicht wird, ist Gegenstand der aktuellen Entwicklungsbestrebungen.

Aus der EP 2 205 686 B1 ist eine Druckfarbe für Tintenstrahldrucker umfassend Bindemittel mit Polycarbonat und Lösemittel sowie ein Verfahren zur Herstellung eines laminierten Schichtverbundes umfassend eine bedruckte Polymerschicht aus Polycarbonat bekannt.

Die EP 3 928 996 A betrifft ein Verfahren zur Markierung von Artikeln, die eine erste und eine zweite farbbildende Schicht auf wenigstens einem Teil eines Trägers aufweisen, wobei jede farbbildende Schicht nach der Markierung eine erste und eine zweite Farbe bildet.

Die WO 2023/281842 lehrt ein thermosensitives Aufzeichnungsmedium, ein Booklet und ein Karte.

Die US 2015/0306887 A1 betrifft einen Verbund umfassend Polymerschichten für Sicherheitsdokumente.

Eine Tintenformulierung zur Lasermarkierung ist aus der EP 3 401 372 A1 bekannt.

Der Erfindung liegt die Aufgabe zugrunde, einen Polymerschichtverbund für Sicherheits- oder Wertdokumente bereitzustellen, der zur farbigen Laserpersonalisierung geeignet, einfach herstellbar ist und nicht delaminiert.

Der Erfindung liegt auch die Aufgabe zugrunde, ein Herstellungsverfahren für solch einen Schichtverbund anzugeben und die zur Herstellung erforderlichen Mittel und die den Schichtverbund umfassenden Sicherheits- und Wertdokumente bereitzustellen.

Diese Aufgabe wird durch die Merkmale des Anspruchs 1, 5, 6 und 14 gelöst.

Der erfindungsgemäße Verbund von Polymerschichten umfasst Polymerschichten aus Polycarbonat und wenigstens eine Polymerschicht, die mit einer Zubereitung, die einen Leukofarbstoff, einen NIR-Aktivator, ein Polycarbonat, Lösemittel und ggf. einen Entwickler umfasst, beschichtet und insbesondere bedruckt ist.

Als Polycarbonat der Zubereitung wird vorzugsweise ein Polycarbonat auf der Basis von Bisphenol A und besonders bevorzugt ein Polycarbonat auf Basis von geminal disubstituierten Dihydroxydiphenylcycloalkanen ausgewählt.

Die Polymerschichten auf Polycarbonatbasis sind direkt mit einer Leukofarbstoffe, NIR-Aktivatoren und ggf. Entwickler umfassenden Zubereitung bedruckbar, wenn die Zubereitung Lösemittel und Polycarbonat vorzugsweise auf Basis von Bisphenol A und besonders bevorzugt auf der Basis von geminal disubstituierten Dihydroxydiphenylcycloalkanen umfasst.

Solche thermochrome Leukofarbstoffe umfassende Zubereitungen sind hochkompatibel mit den Polymerschichten bzw. Folienlagen aus Polycarbonat, die ebenfalls insbesondere aus Polycarbonat auf Basis Bisphenol A und besonders bevorzugt ein Polycarbonat auf Basis von geminal disubstituierten Dihydroxydiphenylcycloalkanen, wie beispielsweise Makrofol^{®} Folien sind.

Nach dem Laminieren des Schichtverbunds ist eine Schichtgrenze optisch nicht mehr zu detektieren, vielmehr wird quasi ein monolithischer Verbund erhalten. Die Polycarbonate in der Zubereitung und in der Schicht sind hochtemperaturstabil und zeigen keinerlei Verfärbungen und können bei Laminationstemperaturen bis zu
200 °C und mehr eingesetzt werden.

Die Druckschicht wirkt nicht als Trennschicht, sondern fördert vielmehr sogar die Bildung eines monolithischen Verbunds im Zuge des Laminierens.

Der Druck kann an jedem beliebigen Ort auf der Polymerschicht erfolgen.

Das Drucken kann mittels Tintenstrahldruck erfolgen. Vorteilhafterweise kann die Zubereitung direkt als Tinte eingesetzt werden.

Dadurch, dass sich die Leukofarbstoffe in den Tinten auf Polycarbonatbasis direkt auf den Polycarbonatschichten/-folien verdrucken lassen, kann ein Schichtverbund, d.h. ein Kartenkörper aus Polycarbonat hergestellt werden, der ein hochsicherer Dokumentenrohling ist, der zu einem späteren Zeitpunkt farbig personalisiert werden kann.

Der in einer Zubereitung enthaltene Leukofarbstoff LF1 regiert mit dem in der Zubereitung ebenfalls enthaltenen Entwickler E1 bei Erwärmung zu einem Farbstoff F1, vorzugsweise einem der Farben Cyan, Magenta oder Yellow. Hierfür weist jede Zubereitung, insbesondere Tinte, einen spezifischen NIR-Aktivator, der auch als Photothermal Conversion Agent (CPA) bezeichnet wird, auf. Der jeweilige NIR-Aktivator absorbiert bei Bestrahlung mit einer bestimmten Wellenlänge λ₁ die NIR-Strahlung, und durch die dadurch bewirkte Erwärmung erfolgt die Reaktion des Leukofarbstoffs LF1 mit dem Entwickler E1 zu dem Farbstoff F1.

Um zu gewährleisten, dass die Reaktionen der verschiedenen Leukofarbstoffe unabhängig voneinander erfolgen, sollten die Absorptionswellenlängen λₙ der verschiedenen mit den Leukofarbstoffen korrespondierenden NIR-Aktivatoren hinreichend voneinander verschieden sein, damit bei Bestrahlung des Schichtverbunds mit der Wellenlänge λ₁ nur die Farbreaktion des Leukofarbstoffs LF1 zu Farbstoff F1, und nicht auch noch des Leukofarbstoffs LF2 oder LF3 zu Farbstoff F2 oder F3 erfolgt.

Für jede der Skalenfarben Cyan, Magenta und Yellow existiert ein spezifischer Leukofarbstoff inklusive Entwickler sowie ein wellenlängensensitiver NIR Absorber.

Um zu verhindern, dass die in einer Schicht durch Laserbestrahlung und NIR-Absorption erzeugte Wärme auf eine angrenzende thermochrome Schicht überspringt, sind vorteilhafterweise zwischen den thermochromen Schichten Wärmeisolationsschichten vorgesehen.

Zur Verhinderung von chemischen oder photochemischen Reaktionen und zur Verbesserung der Haltbarkeit kann der Schichtverbund zusätzlich UV-Filterschichten und Sauerstoffsperrschichten und eine harte, haltbare Deckschicht aufweisen.

Die bedruckten thermochromen Schichten sollten innenliegende Schichten in dem Stapel sein.

Zur Bereitstellung mehrfarbiger laserpersonalisierbarer Bilder umfasst der erfindungsgemäße Verbund vorzugsweise wenigstens zwei und besonders bevorzugt wenigstens drei Polymerschichten, die mit Zubereitungen beschichtet sind, die sich in dem Leukofarbstoff, dem NIR-Aktivator und/oder dem Entwickler unterscheiden.

Zur Herstellung des Verbundes werden die verschiedenen Polymerschichten bereitgestellt, wenigstens eine Polymerschicht aus Polycarbonat mit einer Zubereitung umfassend einen Leukofarbstoff, einen NIR-Aktivator, ein Polycarbonat, Lösemittel und optional einen Entwickler beschichtet und insbesondere bedruckt, die Druckschicht optional getrocknet, die Polymerschichten ggf. mit weiteren Schichten zu einem Stapel zusammengefügt und unter Druck, vorzugsweise bei einer Temperatur von 140 °C bis 230 °C, laminiert. Vorzugsweise werden zwischen den thermochromen Schichten Wärmeisolationsschichten vorgesehen. Zudem sollte der Verbund vorzugsweise UV- Filter- und/oder Sauerstoff-Sperrschichten und harte Deckschichten aufweisen. Je nach Verwendung von z.B. sauerstoffunempfindlichen Leuko-Aktivator-NIR-Absorber-Formulierungen kann auf diese Schichten verzichtet werden.

Die thermochrome Tintenstrahldruckschicht kann vollflächig auf die Polymerschicht aufgebracht werden.

Die optionale Trocknung der aufgebrachten Zubereitung auf der Polymerschicht kann bei einer Temperatur im Bereich 20 °C bis 120 °C, insbesondere 20 °C bis 80 °C, vorzugsweise 20 °C bis 60 °C, für eine Dauer von zumindest 1 Sekunde, vorzugsweise 5 Sekunden bis 600 Sekunden, erfolgen.

Der Druck bei der Lamination liegt typischerweise im Bereich von 1 bar bis 200 bar, insbesondere im Bereich von 15 bar bis 95 bar. Die Laminationstemperatur liegt vorzugsweise im Bereich von 140 °C bis 200 °C, insbesondere im Bereich von 150 °C bis 180 °C. Die Laminationsdauer kann im Bereich von 0,5 Sekunden bis 300 Sekunden, insbesondere 5 Sekunden bis 60 Sekunden, liegen.

Die Polymerschichten des Verbunds sind vorzugsweise Polycarbonatschichten mit einer Glastemperatur T_{g} von mehr als 145 °C, insbesondere mehr als 147 °C, die Polycarbonate weisen im allgemeinen ein mittleres Molekulargewicht (Gewichtsmittel) von mindestens 10.000, vorzugsweise von 20.000 bis 300.000 auf. Die Dicke einer Polycarbonatschicht kann im Bereich von 10 bis 1000 µm, insbesondere von 20 bis 200 µm, liegen.

Die Dicke der auf eine Polycarbonatschicht aufgebrachten Tintenstrahldruckschicht kann, gemessen in Richtungen orthogonal zu der Hauptfläche der Polycarbonatschicht, vor oder nach dem Trocknen, im Bereich von 0,01 bis 10 µm, insbesondere 0,05 bis 5 µm, vorzugsweise 0,02 bis 1 µm, liegen.

Die Gesamtschichtdicke eines solchen Schichtverbunds mit den thermochromen, Wärmeisolations-, Filter-, Schutz- und Sperrschichten liegt bei ca. 20 - 150, bevorzugt 30 Mikrometer.

Die erfindungsgemäße Zubereitung, umfasst
a) 0,01 Gew. % bis 5 Gew. % Leukofarbstoff (13),
b) 0 Gew. % bis 5 Gew. % Entwickler (15),
c) 0,01 bis 2 Gew. % NIR-Aktivator (14),
d) 0,1 Gew. % bis 20 Gew. % Polycarbonat vorzugsweise auf Basis von Bisphenol A und insbesondere von geminal disubstituierten Dihydroxydiphenylcycloalkanen,
e) 30 Gew. % bis 99,9 Gew. % eines Lösemittels oder Lösemittelgemischs,
f) 0 bis 30 Gew. % Additive oder Hilfsstoffe,
wobei die Summe der Komponenten a) bis f) 100 Gew. % beträgt.

Die Zubereitung kann als Tinte zum Tintenstrahldrucken verwendet werden.

Vorzugsweise enthält die Zubereitung zwischen a) 0,1 Gew.% und 2 Gew.% und besonders bevorzugt 0,5 Gew,% bis 1 Gew.% Leukofarbstoff, b) 0,1 Gew.% bis 2,0 Gew.% und besonders bevorzugt 0,5 Gew,% bis 1 Gew.% Entwickler, c) 0,1 Gew.% bis 2,0 Gew.% und besonders bevorzugt 0,5 Gew,% bis 1 Gew.% NIR-Aktivator, d) 0,1 Gew.% bis 10 Gew. %, insbesondere 0,5 Gew.% bis 5 Gew. % Polycarbonat auf Basis von geminal disubstituierten Dihydroxydiphenylcycloalkanen, e) 40 bis 99,9 Gew. %, insbesondere 45 bis 99,5 Gew.- %, eines organischen Lösungsmittels oder Lösungsmittelgemischs, f) 0,001 bis 6 Gew. %, insbesondere 0,1 bis 4 Gew. %, Additive, Hilfsstoffe oder deren Mischung.

Die Leukofarbstoffe (Komponente a) sind Verbindungen mit Elektronendonoreigenschaften und können alleine oder in Kombination mit 2 oder mehr Spezies eingesetzt werden. Die Leukofarbstoffe selbst sind farblose oder schwachgefärbte Farbstoffprecursor beispielsweise aus der Gruppe der Triphenylmethanphthalid-, Triarylmethan-, Fluoran-, Phenothiazin-, Thiofluoran-, Xanthen-, Indophthalyl-, Spiropyran-, Azaphthalid-, Chlormenopirazol, Methyn-, Rhodamin-Anilinolactum-, Rhodamin-Lactum-, Quinazolin-, Diazaxanthen- und Bislacton-Verbindungen.

Vorzugsweise werden die Leukofarbstoffe aus der Gruppe der 2-Anilino-3-methyl-6-diethylaminofluoran, 2-Anilino-3-methyl-6-(di-n-butylamino) fluoran, 2-Anilino-3-methyl-6-(di-n-pentylamino)fluoran, 2-Anilino-3-methyl-6-(N-n-propyl-N-methylamino)fluoran, 2-Anilino-3-methyl-6-(N-isopropyl-N-methylamino)fluoran, 2-Anilino-3-methyl-6-(N-Isobutyl-N-methylamino)fluoran, 2-Anilino-3-methyl-6-(N-n-Amyl-N-methylamino) fluoran, 2-Anilino-3-methyl-6-(N-sec-butyl-N-ethylamino) fluoran, 2-Ani-lino-3-methyl-6-(N-n-amyl-N-ethylamino) fluoran, 2-Anilino-3-methyl-6-(N-iso-amyl-N-ethyl amino) fluoran, 2-Anilino-3-methyl-6-(N-cyclohexyl-N-methylamino) fluoran, 2-Anilino-3-methyl-6-(N-ethyl-p-toluidino) fluoran, 2-Anilino-3-methyl-6-(N-methyl-p-toluidino) fluoran, 2-(m-Trichlor-methylanilin)-3-methyl-6-diethylaminofluoran, 2-(m-Trifluormethylanilin)-3-methyl-6-diethylamino Fluoran, 2-(m-Trifluormethylanilino)-3-methyl-6-(N-Cyclohexyl-N-methylamino) Fluoran, 2-(2,4-Dimethylanilino)-3-methyl-6-diethylaminofluoran, 2-(N-Ethyl-p-toluidino)-3-methyl-6-(N-ethylanilino)fluoran, 2-(N-Methyl-p-toluidino)-3-methyl-6-(N-propyl-p-toluidino)fluoran, 2-anilino-6-(N-n-hexyl-N-ethylamino)fluoran, 2-(o-chloranilino)-6-diethylamino Fluoran, 2-(o-Bromanilino)-6-diethylaminofluoran, 2-(o-Chloranilino)-6-dibutylaminofluoran, 2-(o-Fluoranilino)-6-dibutylaminofluoran,2-(m-Trifluormethylanilino)-6-diethylaminofluoran,2-(p-Acetylanilino)-6-(N-n-Amyl-N-n-butylamino) Fluoran,2-Benzyla-mino-6-(N-Ethyl-p-toluidino)fluoran, 2-Benzylamino-6-(N-Methyl-2,4-di-methylanilino)fluoran, 2-Benzyl-amino-6-(N-ethyl-2,4-dimethylani-lino)fluoran, 2-Dibenzylamino-6-(N-methyl-p-toluidino)fluoran, 2-Di-benzylamino-6-(N-Ethyl-p-toluidino)fluoran, 2-(Di-p-methylbenzyla-mino)-6-(N-ethyl-p-toluidino)fluoran, 2-(a-Phenylethylamino)-6-(N-Ethyl-p-toluidino)-fluoran, 2-Methylamino-6-(N-methylanilino)-fluoran, 2-Methylamino-6-(N-ethylanilino)-fluoran, 2-Methylamino-6-(N-propyla-nilino)fluoran, 2-Ethylamino-6-(N-methyl-p-toluidino)fluoran, 2-Methyla-mino-6-(N-methyl-2,4-Dimethylanilino)fluoran, 2-Ethylamino-6-(N-methyl-2,4-dimethylanilino)fluoran, 2-Dimethylamino-6-(N-methylani-lino)fluoran, 2-Dimethylamino-6-(N-Ethylanilino)fluoran, 2-Diethyla-mino-6-(N-Methyl-p-toluidino)fluoran, Benzo-leuco-Methylenblau, 2-[3,6-Bis(diethylamino)]-6-(o-chloranilino) xanthylbenzoesäurelactum, 2-[3,6-Bis(diethylamino)]-9-(o-Chloranilino)xanthylbenzoesäurelactum, 3,3-Bis(p-dimethylaminophenyl)phthalid, 3,3-Bis(p-dimethylaminophenyl)-6-Dimethylaminophthalid, 3,3-Bis(p-dimethylamino-phenyl)-6-diet-hylaminophthalid, 3,3-Bis(p-dimethylamino-phenyl)-6-chlorphthalid, 3,3-Bis(p-dibutylamino-phenyl)phthalid, 3-(2-Methoxy-4-dimethylaminophenyl)-3-(2-hydroxy-4,5-Dichlorphenyl)phthalid, 3-(2-Hydroxy-4-dimethylaminophenyl)-3-(2-methoxy-5-chlorphenyl)phthalid, 3-(2-Hydroxy-4-dimethoxyaminophenyl)-3-(2-methoxy-5-chlorphenyl)phthalid, 3-(2-Hydroxy-4-dimethoxyaminophenyl)-3-(2-Methoxy-5-nitrophenyl)phthalid, 3-(2-Hydroxy-4-diethylamino-phenyl)-3-(2-methoxy-5-methyl-phenyl)phthalid, 3,6-Bis(dimethylamino)fluorenespiro(9,3')-6'-dime-thylaminophthalid,6'-Chlor-8'-methoxy-benzoindolinospiropyran und 6'-Brom-2'-methoxy-Benzoindolino-Spiropyran ausgewählt. Die vorgenannten Leukofarbstoffe können allein oder in Kombination verwendet werden.

Der Leukofarbstoff reagiert nach Anwendung von Wärme mit dem Entwickler zu einem Farbstoff.

Die Farbstoffreaktion sollte irreversibel sein, um Manipulationsversuche zu verhindern.

Als Entwickler b) werden vorzugsweisen elektronenakzeptierende Materialien verwendet, die mit den vorgenannten Leukofarbstoffen zum Zeitpunkt der Erhitzung reagieren, um Farben zu entwickeln. Beispiele hierfür sind Phenolverbindungen, organische oder anorganische säurehaltige Verbindungen und Ester oder Salze davon. Insbesondere sind folgende Verbindungen als Entwickler geeignet: Bisphenol A, Tetrabromobisphenol A, Gallussäure, Salicylsäure, 3-Isopropylsalicylat, 3-Cyclohexylsalicylat, 3-5-Di-tert-Butylsalicylat, 3,5-Di-α-methylbenzylsalicylat, 4,4'-Isopropylidendiphenol, 1,1'-Isopropylidenbis (2-Chlorphenol), 4,4'-Isopropylidenbis (2,6-Dibromphenol), 4,4'-Isopropylidenbis (2,6-Dichlorphenol), 4,4'-Isopropylidenbis (2-Methylphenol), 4,4'-Isopropyliden-bis (2,6-Dimethylphenol), 4,4'-Isopropyliden-bis (2-tert-Butylphenol), 4,4'-sec-Butylidene Diphenol, 4,4'-Cyclohexyliden-Bisphenol, 4,4'-Cyclohexyliden-bis-(2-Methylphenol), 4-tert-Butylphenol, 4-Phenyl-Phenol, 4-Hydroxy-Diphenoxid, o-Naphthol, β-Naphthol, 3,5-Xylenol, Thymol, Methyl-4-hydroxybenzoat, 4-Hydroxyacetophenon, Novolak-Phenolharze, 2,2'-Thio-bis-(4,6-Dichlorphenol), Catechin, Resorcin, Hydrochinon, Pyrogallol, Fluorglycin, Fluorglycincarboxylat, 4-tert-Octylcatechin, 2,2'-Methylen-bis-(4-chlorphenol), 2,2'-Methylen-bis(4-Methyl-6-tert.-butylphenol), 2,2'-Dihydroxydiphenyl, Ethyl-p-hydroxybenzoat, Propyl-p-hydroxybenzoat, Butyl-p-Hydroxybenzoat, Benzyl-p-hydroxybenzoat, p-Hydroxybenzoat-p-chlorbenzyl, p-Hydroxybenzoat-o-chlorbenzyl, p-Hydroxybenzoat-p-methylbenzyl, p-Hydroxybenzoat-n-octyl, Benzoesäure, Zinksalicylat, 1-Hydroxy-2-naphthoesäure, 2-Hydroxy-6-naphthoesäure, 2-Hydroxy-6-zinknaphthoat, 4-Hydroxydiphenylsulfon, 4-Hydroxy-4'-chlorodiphe-nylsulfon, Bis(4-hydroxyphenyl)sulfid, 2-Hydroxy-p-toluylsäure, 3,5-Di-tert.-Zinkbutylsalicylat, 3,5-Di-tert.-Zinnbutylsalicylat, Salicylat, Weinsäure, Oxalsäure, Maleinsäure, Zitronensäure, Bernsteinsäure, Stearinsäure, 4-Hydroxyphthalsäure, Borsäure , Thioharnstoffderivate, 4-Hydroxythiophenolderivate, Bis(4-hydroxyphenyl)acetat, Bis(4-hydroxyphenyl)ethylacetat, Bis(4-hydroxyphenyl)ethylacetat, Bis(4-hydroxyphenyl)acetat-n-propyl, Bis(4-hydroxyphenyl)acetat-n-butyl, Bis(4-hydroxyphenyl)phenylacetat, Bis(4-hydroxyphenyl)benzylacetat, Bis(4-hydroxyphenyl)phenethylacetat, Bis(3-methyl-4-hydroxyphenyl)acetat, Bis-(3-methyl-4-hydroxyphenyl)-methylacetat, Bis-(3-methyl-4-hydroxyphenyl)-acetat-n-propyl, 1,7-Bis-(4-hydroxyphenylthio) 3,5-dioxaheptan, 1,5-Bis(4-hydroxyphenylthio) 3-oxaheptan, 4-Hydroxyphthalatdimethyl, 4 Hydroxy-4'-methoxy-diphenylsulfon, 4-Hydroxy-4'-ethoxy-diphenylsulfon, 4-Hydroxy-4'-isopropoxy-diphenylsulfon, 4-Hydroxy-4'-propoxy-diphenylsulfon, 4-Hydroxy-4'-butoxy-diphenylsulfon, 4-Hydroxy-4'-isopropoxy-diphenylsulfon, 4-Hydroxy-4'-sec-butoxy-diphenylsulfon, 4-Hydroxy-4'-tert-butoxy-diphenylsulfon, 4-Hydroxy-4'-benzyloxy-diphenylsulfon, 4-Hydroxy-4'-phenoxy-diphenylsulfon, 4-Hydroxy-4'-(m-methyl-benzoxy) diphenylsulfon, 4-Hydroxy-4'-(p-Methylbenzoxy)-diphenylsulfon, 4-Hydroxy-4'-(o-methylbenzoxy)-diphenylsulfon, 4-Hydroxy-4'-(p-chlorbenzoxy)Diphenylsulfon, 4-Hydroxy-4'-oxyaryl-diphenylsulfon, 4-Hydroxy-4-allyloxy-diphenylsulfon, N-(2-((Phenylcarbamoyl)amino)phenyl) benzolsulfonamid, 4,4'-Sulfonylbisphenol, Polymer mit 1,1'-Oxybis[2-chlorethan], 2-(4-Hydroxyphenylsulfonyl)phenol,(Bis(3-allyl-4-hydroxyphenyl)sulfon),2,2'-Diallyl-4,4'-sulfonyldiphenol.

Die Entwickler können allein oder in Kombination verwendet werden.

Die NIR-Aktivatoren, die in der vorliegenden Rezeptur die Komponenten c) bilden, sollten eine hohe Lichtstabilität, eine steile Absorptionskante, keine Nebenabsorptionsmaxima im visuellen Bereich und hohe Extensionskoeffizienten aufweisen. Grundsätzlich können als IR-Absorber sowohl anorganische Substanzen eingesetzt werden, beispielsweise Metalloxide (Wolframbronze), Koordinationsverbindungen, Seltene Erden oder -Verbindungen, insbesondere aus der Gruppe Dysprosium, Thulium, Ytterbium, oder der organischen Verbindungen wie der p-Benzochinondiimoniumsalze, Nickeldithiolenkomplexe oder Quaterrylene.

Die Zubereitung enthält als Komponente d) Polycarbonate auf Basis von Bisphenol A und besonders bevorzugt auf Basis geminal disubstituierter Dihydroxydiphenylcycloalkane insbesondere der nachfolgenden Formel (I) 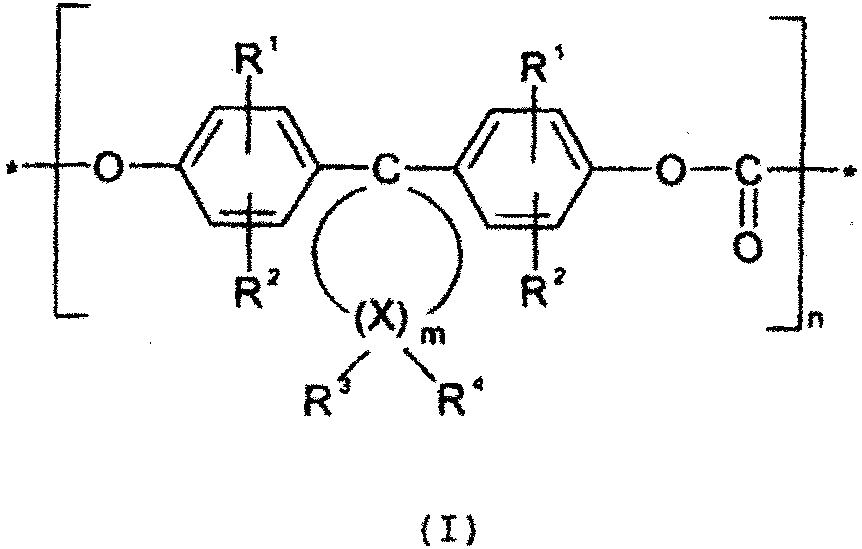 worin R1 und R2 unabhängig voneinander Wasserstoff, Halogen, bevorzugt Chlor oder Brom, C1-C8-Alkyl, C5-C6-Cycloalkyl, C6-C10-Aryl, bevorzugt Phenyl, und C7-C12-Aralkyl, bevorzugt Phenyl-C1-C4-Alkyl, insbesondere Benzyl; m eine ganze Zahl von 4 bis 7, bevorzugt 4 oder 5; R3 und R4 für jedes X individuell wählbar, unabhängig voneinander Wasserstoff oder C1-C6-Alkyl; X Kohlenstoff und n eine ganze Zahl größer 20 bedeuten, mit der Maßgabe, dass an mindestens einem Atom X, R3 und R4 gleichzeitig Alkyl bedeuten.

Bevorzugt ist es, wenn an einem oder zwei Atomen X, insbesondere nur an einem Atom X, R3 und R4 gleichzeitig Alkyl sind. R3 und R4 können insbesondere Methyl sein. Die X-Atome in alpha-Stellung zu dem Diphenyl-substituierten C-Atom (C1) können nicht dialkylsubstituiert sein. Die X-Atome in beta-Stellung zu C1 können mit Alkyl disubstituiert sein. Bevorzugt ist m = 4 oder 5. Das Polycarbonat ist vorzugsweise ein Polycarbonat auf Basis von Monomeren wie 4,4'-(3,3,5-trimethylcyclohexan-1,1-diyl)diphenol, 4,4'-(3,3-dimethylcyclohexan-1,1-diyl)diphenol, oder 4,4'-(2,4,4- trimethylcyclopentan-1,1-diyl)diphenol.

Das Lösemittel gemäß Komponente e) kann grundsätzlich im Wesentlichen organisch oder wässrig sein. Im Wesentlichen wässrig meint dabei, dass bis zu 20 Gew. % der Komponente e) organische Lösungsmittel sein können. Im Wesentlichen organisch meint, dass bis zu 5 Gew. % Wasser in der Komponente e) vorliegen können. Vorzugsweise enthält die Komponente e) einen bzw. besteht aus einem flüssigen aliphatischen, cycloaliphatischen und/oder aromatischen Kohlenwasserstoff, einem flüssigen organischen Ester, und/oder einer Mischung solcher Substanzen. Die eingesetzten organischen Lösungsmittel sind vorzugsweise halogenfreie organische Lösungsmittel. In Frage kommen insbesondere aliphatische, cycloaliphatische, aromatische Kohlenwasserstoffe, wie Mesitylen, 1,2,4- Trimethylbenzol, Cumol und Solvent Naphta, Toluol, Xylol; (organische) Ester, wie Methylacetat, Ethylacetat, Butylacetat, Methoxypropylacetat, Ethyl-3-ethoxypropionat. Bevorzugt sind Mesitylen, 1,2,4-Trimethylbenzol, Cumol und Solvent Naphta, Toluol, Xylol, Essigsäuremethylester, Essigsäureethylester, Methoxypropylacetat. Ethyl-3-ethoxypropionat. Ganz besonders bevorzugt sind: Mesitylen (1,3,5-Trimethylbenzol), 1,2,4-Trimethylbenzol, Cumol (2-Phenylpropan), Solvent Naphta und Ethyl-3-ethoxypropionat.

Ein geeignetes Lösungsmittelgemisch umfasst beispielsweise L1) 0 bis 10 Gew. %, vorzugsweise 1 bis 5 Gew. %, insbesondere 2 bis 3 Gew. %, Mesitylen, L2) 10 bis 50 Gew. %, vorzugsweise 25 bis 50 Gew. %, insbesondere 30 bis 40 Gew. %, 1-Methoxy-2-propanolacetat, L3) 0 bis 20 Gew. %, vorzugsweise 1 bis 20 Gew. %, insbesondere 7 bis 15 Gew. %, 1,2,4-Trimethylbenzol, L4) 10 bis 50 Gew. %, vorzugsweise 25 bis 50 Gew. %, insbesondere 30 bis 40 Gew. %, Ethyl-3-ethoxypropionat, L5) 0 bis 10 Gew. %, vorzugsweise 0,01 bis 2 Gew. %, insbesondere 0,05 bis 0,5 Gew. %, Cumol, und L6) 0 bis 80 Gew. %, vorzugsweise 1 bis 40 Gew. %, insbesondere 15 bis 25 Gew. %, Solvent Naphta, wobei die Summe der Komponenten L1 bis L6 in Bezug auf das Lösemittelgemisch stets 100 Gew. % ergibt.

Weiterhin kann die Zubereitung gemäß Komponente f) Antischaummittel, Netzmittel, Tenside, Fließmittel, Katalysatoren, Konservierungsmittel, Tenside, organische Polymere zur Viskositätseinstellung, etc. umfassen. Als Tenside kommen alle handelsüblichen Tenside, welche für Tinten verwendet werden, in Frage. Bevorzugt sind amphotere oder nichtionische Tenside. Selbstverständlich ist aber auch der Einsatz spezieller anionischer oder kationischer Tenside, welche die Eigenschaften des Farbstoffs nicht verändern, möglich. Beispiele für geeignete Tenside sind Betaine, ethoxilierte Diole usw. Beispiele sind die Produktreihen Surfynol^{®} und Tergitol^{®}.

Die Menge an Tensiden wird beispielsweise mit der Maßgabe gewählt, dass die Oberflächenspannung der Tinte im Bereich von 10 bis 60 mN/m, vorzugsweise 25 bis 35 mN/m, gemessen bei 25 °C, liegt. Der Anteil an Tensid, bezogen auf die Gesamtmenge an Tinte, kann im Bereich von 0 bis 0,2 Gew. % liegen. Der Anteil an Stellmitteln kann, bezogen auf die Gesamtmenge an Tinte, 0 bis 1 Gew. %, vorzugsweise 0,1 bis 0,5 Gew. %, betragen.

Schließlich betrifft die Erfindung ein Sicherheits- und/oder Wertdokument enthaltend einen erfindungsgemäßen Verbund.

Zur farbigen Personalisierung wird der Verbund, der in ein Sicherheits- oder Wertdokument integriert sein kann, mit einem oder mehreren NIR-Lasern bestrahlt und so das gewünschte farbige Bild erzeugt.

Als Sicherheits- und/oder Wertdokument seien beispielhaft genannt: Führerscheine, Personalausweise, Reisepässe, ID-Karten, Zugangskontrollausweise, Visa, Steuerzeichen, Tickets, Führerscheine, Kraftfahrzeugpapiere, Banknoten, Schecks, Postwertzeichen, Kreditkarten, beliebige Chipkarten und Haftetiketten (z.B. zur Produktsicherung). Ein solches Sicherheits- und/oder Wertdokument umfasst innerhalb des Gesamt-Schichtverbundes einen erfindungsgemäßen Verbund.

Die Erfindung wird nachfolgend anhand von Ausführungsbeispielen näher beschrieben.
- Figur 1:: zeigt einen ersten schematischen Aufbau eines erfindungsgemäßen Schichtverbundes.
- Figur 2:: zeigt einen zweiten schematischen Aufbau eines erfindungsgemäßen Schichtverbundes.
- Figur 3:: zeigt a) schematisch die Absorption der drei unterschiedlichen NIR-Aktivatoren in den drei thermochromen Schichten mit den Leukofarbstoffen zur Erzeugung der Cyan, Magenta und Yellow-Farbstoffe und b) die bei Bestrahlung mit der Wellenlänge λ₂ und λ₃ erzeugten Farbstoffe.

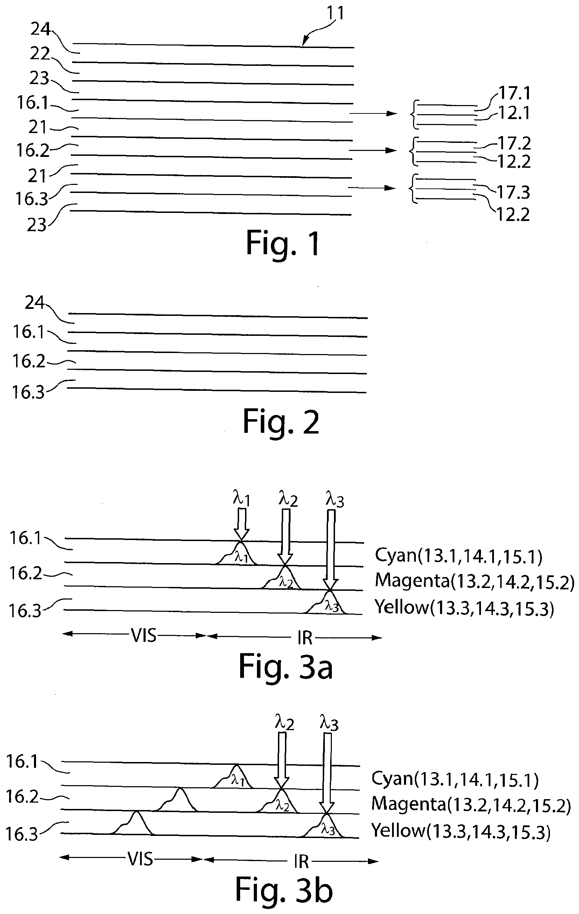

Figur 1 zeigt einen erfindungsgemäßen Schichtverbund 11. Der Schichtverbund umfasst mehrere thermochrome Schichten 16.1 ... 16.3, eine Deckschicht 24, Wärmeisolationsschichten 21, UV-Sperrschichten 22 und Sauerstoff-Sperrschichten 23. Die thermochromen Schichten 16.1 ... 16.3 liegen innerhalb des Stapels. Eine jede thermochrome Schicht 16.1 ... 16.3 umfasst eine Polymerschicht 12.1 ... 12.3, die mit einer Druckschicht mit einer Tinte 17.1 ... 17.3 mit einem spezifischen Leukofarbstoff 13.1 ... 13.3, einem spezifischen Entwickler 15.1 ... 15.3 und einem spezifischen NIR-Aktivator 14.1 ... 14.3 bedruckt ist, um thermochrome Schichten zur Herstellung einer cyanfarbenen Druckschicht, magentafarbenen Druckschicht und einer yellowfarbenen Druckschicht bereitzustellen, vgl. Figur 3.

In Figur 2 ist eine weitere vereinfachte Variante eines Aufbaus eines Schichtverbundes ohne Sperrschichten dargestellt, in dem die thermochromen Schichten direkt übereinander gedruckt sind.

In diesen Beispielen umfasst die thermochrome Schicht 16.1 beispielsweise die Zubereitung 17.1 mit dem speziellen Leukofarbstoffe 13.1, dem Entwickler 15.1 und dem damit korrespondierenden NIR-Aktivator 14,1 zur Herstellung eines cyanfarbenen Farbstoffs, die zweite Schicht 16.2 die entsprechenden Komponenten zur Herstellung des magentafarbenen Farbstoffs (13.2, 14.2, 15.2) etc.

Zwischen den thermochromen Schichten 16.1, 16.2, 16.3 befindet sich jeweils eine Wärmeisolationsschicht 21. Die beiden äußeren thermochromen Schichten sind mit einer Sauerstoff-Barriereschicht 23 und einer UV-Schutzschicht 22 abgedeckt. Der Verbund ist an seiner Sichtseite zusätzlich durch eine harte Deckschicht 24 geschützt.

Der Verbund kann an der Unterseite ebenfalls eine harte Deckschicht 24 aufweisen oder aber mit einem Trägermaterial verklebt sein.

In Figur 3a) sind schematisch die drei thermochromen Schichten 16.1, 16.2 und 16.3 (ohne die Wärmeisolationsschicht 21) dargestellt. In der ersten thermochromen Schicht 16.1 kann der Cyan-Leukofarbstoff 13.1 durch Bestrahlung mit der Wellenlänge λ₁ (und Absorption des entsprechenden NIR-Aktivators 14.1 für die Wellenlänge λ₁) in den Cyan-Farbstoff umgewandelt werden, in der zweiten thermochromen Schicht 16.2 der magenta-Leukofarbstoff 13.2 durch Bestrahlung mit der Wellenlänge λ₂ in den Magenta-Farbstoff und in der dritten thermochromen Farbschicht 16.3 der Yellow-Leukofarbstoff 13.3 durch Bestrahlen mit der Wellenlänge λ₃ in den Yellow-Farbstoff.

In Figur 3b) ist das Ergebnis nach Bestrahlung des Schichtverbunds mit den Wellenlängen λ₂ und λ₃ dargestellt. In den thermochromen Schichten 16.2 und 16.3 wurde der jeweilige Farbstoff, nämlich Magenta und Yellow, erzeugt, (wie schematisch durch die auftretenden Absorptionsbanden im VIS dargestellt), in der ersten Schicht nicht. Die erste Schicht 16.1 ist am Bestrahlungsort farblos, die zweite Schicht 16.2 magentafarben und die dritte Schicht 16.3 yellow. Durch Bestrahlung mit einem NIR-Laser können hochaufgelöste "Hot-Spots" generiert werden, da nur in unmittelbarer Umgebung die Farbreaktion des Leukofarbstoffs aufgelöst wird. In diesem Beispiel werden Magenta und Gelb angeregt und die resultierenden Leukofarbstoff werden sichtbar und ergeben durch Überlagerung von Magenta und Yellow die Farbe "rot".

### Beispiel einer erfindungsgemäßen Zubereitung (Polycarbonat-Tinte mit Leukofarbstoff):

| Komponente | Mengenbereich (Gew. %) | Funktion |
|---|---|---|
| Polycarbonatcopolymer aus Bisphenol-A und einem Bisphenol-Cyclohexan-Derivat | 1 - 10 | Polymerer Binder |
| Mesitylen | 1 - 5 | Lösemittel |
| 1-Methoxy-2-Propanolacetat | 10 - 50 | Lösemittel |
| 1,2,4-Trimethylbenzo | 2 - 20 | Lösemittel |
| Ethyl-3-Ethoxypropionat | 10 - 50 | Lösemittel |
| Cumol | 0,1 - 2 | Lösemittel |
| Solvent Naphta | 10 - 30 | Lösemittel |
| Butyl-Glycol-Acetat | 10 - 50 | Lösemittel |
| 2-anilino-3-methyl-6-diethyl aminofluoran | 0,01 - 2 | Leukofarbstoff |
| Bisphenol-A oder Bisphenol-S | 0,01-2 | Entwickler Leukofa rbstoff |
| Quaterrylen (QDI) | 0,01 - 2 | NIR_Aktivator (Absorption 780 nm) |
| Nicht-ionische Tenside | 0,01 - 2 | Dispersionshilfsmittel |

Die erfindungsgemäße Zubereitung kann als Tinte für den Tintenstrahldruck eingesetzt werden. Sie kann direkt auf die Polycarbonatschicht auf der Basis von Bisphenol-A aufgedruckt, anschließend optional getrocknet, zusammen mit den anderen Schichten zu dem Folienstapel zusammengefügt und anschließend laminiert werden.

### Bezugszeichenliste

11 Verbund
12, 12.1 ... 12.n Polymerschicht
13, 13.1 ... 13.n Leukofarbstoff
14, 14.1 ... 14.n NIR-Aktivator
15, 15.1 ... 15.n Entwickler
15, 16.1 ... 16.n thermochrome Schicht
17 Zubereitung
21 Wärmeisolationsschicht
22 UV-Filterschicht
23
Sauerstoff-Sperrschicht
24 Deckschicht
30 Sicherheits- oder Wertdokument

## Patentansprüche

1. Verbund (11) umfassend Polymerschichten (12) auf Basis von Polycarbonat für Sicherheitsdokumente, wobei wenigstens eine Polymerschicht (12) zur Bereitstellung einer thermochromen Schicht (16) mit einer Zubereitung (17) umfassend einen Leukofarbstoff (13), einen NIR-Aktivator (14), Polycarbonat, Lösemittel und optional einen Entwickler (15) beschichtet und insbesondere bedruckt ist.

2. Verbund nach Anspruch 1, **dadurch gekennzeichnet, dass** der Verbund (11) mehrere Polymerschichten (12.1 ... 12.n) umfasst, wobei wenigstens zwei Polymerschichten (12.1, 12.2) mit Zubereitungen (17.1, 17.2) beschichtet sind, die sich in dem Leukofarbstoff (13.1, 13.2), dem NIR-Aktivator (14.1, 14.2) und/oder einem Entwickler (15.1, 15.2) unterscheiden.

3. Verbund nach einem der Ansprüche 1 oder 2, **dadurch gekennzeichnet, dass** das Polycarbonat der Polymerschicht (12) und/oder der Zubereitung (17) ein Polycarbonat auf Basis von Bisphenol-A und insbesondere ein Polycarbonat auf Basis von geminal disubstituierten Dihydroxydiphenylcycloalkanen ist.

4. Verbund nach einem der vorangegangenen Ansprüche, **dadurch gekennzeichnet, dass** die thermochromen Schichten (16) in dem Verbund (11) innenliegende Schichten sind und/oder zwischen den thermochromen Schichten (16) Wärmeisolationsschichten (21) vorgesehen sind und/oder der Verbund (11) UV-Filterschichten (22) und/oder Sauerstoff-Sperrschichten (23) und/oder wenigstens eine harte Deckschicht (24) aufweist.

5. Verfahren zur Herstellung eines Verbunds (11) nach einem der Ansprüche 1 bis 4, **dadurch gekennzeichnet, dass** Polymerschichten (12) bereitgestellt werden, wenigstens eine Polymerschicht (12.1) aus Polycarbonat mit einer Zubereitung (17) umfassend einen Leukofarbstoff (13), einen NIR-Aktivator (14), Polycarbonat, Lösemittel und optional einen Entwickler (15) beschichtet und insbesondere bedruckt wird, die Druckschicht optional getrocknet, die Polymerschichten (12) ggs. mit weiteren Schichten wie Wärmeisolationsschichten (21), UV-Filterschichten(22), Sauerstoff-Sperrschichten (23) und/oder Deckschichten (24) zu einem Stapel zusammengefügt und anschließend laminiert werden.

6. Zubereitung (17), insbesondere zur Verwendung in einem Verfahren nach Anspruch 5, umfassend
a) 0,01 Gew. % bis 5 Gew. % Leukofarbstoff (13),
b) 0 Gew. % bis 5 Gew. % Entwickler (15),
c) 0,01 bis 2 Gew. % NIR-Aktivator (14),
d) 0,1 Gew. % bis 20 Gew. % Polycarbonat, vorzugsweise auf Basis von Bisphenol A und insbesondere von geminal disubstituierten Dihydroxydiphenylcycloalkanen,
e) 30 Gew. % bis 99,9 Gew. % eines Lösemittels oder Lösemittelgemischs,
f) 0 Gew. % bis 30 Gew. % Additive oder Hilfsstoffe,
wobei die Summe der Komponenten a) bis f) stets 100 Gew. % beträgt.

7. Zubereitung nach Anspruch 6, umfassend zwischen
a) 0,1 Gew. % und 2 Gew. % und besonders bevorzugt 0,5 Gew % bis 1 Gew. % Leukofarbstoff (13),
b) 0,1 Gew. % bis 2,0 Gew. % und besonders bevorzugt 0,5 Gew % bis 1 Gew. % Entwickler (15),
c) 0,1 Gew. % bis 2,0 Gew. % und besonders bevorzugt 0,5 Gew % bis 1 Gew. % NIR-Aktivator (14),
d) 0,1 Gew. % bis 10 Gew. %, insbesondere 0,5 Gew. % bis 5 Gew. % Polycarbonat, auf Basis von geminal disubstituierten Dihydroxydiphenylcycloalkanen
e) 40 Gew. % bis 99,9 Gew. %, insbesondere 45 Gew. % bis 99,5 Gew. %, eines organischen Lösungsmittels oder Lösungsmittelgemischs, f) 0,001 Gew. % bis 6 Gew. %, insbesondere 0,1 Gew. % bis 4 Gew. %, Additive, Hilfsstoffe oder deren Mischung.

8. Zubereitung nach einem der Ansprüche 6 oder 7, **dadurch gekennzeichnet, dass** die Leukofarbstoffe (13) aus der Gruppe der Triphenylmethanphthalid-, Triarylmethan-, Fluoran-, Phenothiazin-, Thiofluoran-, Xanthen-, Indophthalyl-, Spiropyran-, Azaphthalid-, Chlormenopirazol, Methyn-, Rhodamin-Anilinolactum-, Rhodamin-Lactum-, Quinazolin-, Diazaxanthen- und Bislacton-Verbindungen ausgewählt werden.

9. Zubereitung nach einem der Ansprüche 6 bis 8, **dadurch gekennzeichnet, dass** die Entwickler (15) aus der Gruppe der Phenolverbindungen, der organischen oder anorganischen säurehaltige Verbindungen, der Ester oder deren Salze ausgewählt wird.

10. Zubereitung nach einem der Ansprüche 6 bis 9, **dadurch gekennzeichnet, dass** die NIR-Aktivatoren (14) aus der Gruppe der Metalloxide, Wolframbronze, Koordinationsverbindungen, Seltene Erden oder -Verbindungen, insbesondere aus der Gruppe Dysprosium, Thulium, Ytterbium, oder der organischen Verbindungen wie der p-Benzochinondiimoniumsalze, Nickeldithiolenkomplexe oder Quaterrylene ausgewählt werden.

11. Zubereitung nach einem der Ansprüche 6 bis 10, **dadurch gekennzeichnet, dass** die Komponente e) (Lösemittel) flüssigen aliphatischen, cycloaliphatischen, und/oder aromatischen Kohlenwasserstoff, einen flüssigen organischen Ester und/oder eine Mischung solcher Substanzen umfasst.

12. Zubereitung nach einem der Ansprüche 6 bis 11, **dadurch gekennzeichnet, dass** das Lösemittelgemisch umfassend L1) 0 bis 10 Gew. %, vorzugsweise 1 bis 5 Gew. %, insbesondere 2 bis 3 Gew. %, Mesitylen, L2) 10 bis 50 Gew. %, vorzugsweise 25 bis 50 Gew. %, insbesondere 30 bis 40 Gew. %, 1-Methoxy-2-propanolacetat, L3) 0 bis 20 Gew. %, vorzugsweise 1 bis 20 Gew. %, insbesondere 7 bis 15 Gew. %, 1,2,4-Trimethylbenzol, L4) 10 bis 50 Gew. %, vorzugsweise 25 bis 50 Gew. %, insbesondere 30 bis 40 Gew. %, Ethyl-3-ethoxypropionat, L5) 0 bis 10 Gew. %, vorzugsweise 0,01 bis 2 Gew. %, insbesondere 0,05 bis 0,5 Gew. %, Cumol, und L6) 0 bis 80 Gew. %, vorzugsweise 1 bis 40 Gew. %, insbesondere 15 bis 25 Gew. %, Solvent Naphta, wobei die Summe der Komponenten L1 bis L6 in Bezug auf das Lösemittelgemisch stets 100 Gew. % ergibt.

13. Verwendung einer Zubereitung nach einem der Ansprüche 6 bis 12 als Tintenstrahldruckfarbe.

14. Sicherheits- und Wertdokument umfassend einen Verbund von Polymerschichten nach einem der Ansprüche 1 bis 4.
